# EUROPEAN PATENT APPLICATION

(11) **EP 4 099 627 A1**
(43) Date of publication of application: **07.12.2022**
(21) Application number: 22177013.4
(22) Date of filing: 02.06.2022
(51) Int. Cl.: H04L 9/40

(54) **METHOD FOR SYNCHRONIZING VERIFICATION CODE, ELECTRONIC DEVICE AND STORAGE MEDIUM**

(30) Priority: 08.06.2021 CN 202110639076
(71) Applicant: Apollo Intelligent Connectivity (Beijing) Technology Co., Ltd., Beijing 100176 (CN)
(72) Inventor: Yao, Qianpeng, Beijing, 100176 (CN)
(74) Representative: Maiwald GmbH

(57) **Abstract**

Disclosed are a method and an apparatus for synchronizing a verification code, an electronic device and a storage medium. The specific solution includes: acquiring (101) by a server a verification code sent by a first client, in which the first client is located in a first terminal device; determining (102, 202, 304) by the server a second client associated with the first client based on an identifier of the first client, in which the second client is located in a second terminal device; and sending (103) by the server the verification code to the second client, to cause the second client to synchronize the verification code to a target application.

## Description

### TECHNICAL FIELD

The disclosure relates to a field of computer technologies, specifically to a field of artificial intelligence (AI) technologies such as natural language processing (NLP), and particularly to a method for synchronizing a verification code, an electronic device and a storage medium.

### BACKGROUND

With the booming of computer technologies, a user may have a plurality of different electronic devices, so that when the user wants to enter a verification code in a current electronic device, another electronic device may receive the verification code. In this case, the user needs to remember the verification code received by another electronic device first, and then enter it in the current electronic device. Therefore, when a verification code is entered in case of crossing different electronic devices, it is an urgent problem to be solved how to achieve rapid inputting of the verification code.

### SUMMARY

The disclosure provides a method for synchronizing a verification code, an electronic device and a storage medium.

According to one aspect of the disclosure, a method for synchronizing a verification code is provided. The method includes: acquiring by a server a verification code sent by a first client, in which the first client is located in a first terminal device; determining by the server a second client associated with the first client based on an identifier of the first client, in which the second client is located in a second terminal device; and sending by the server the verification code to the second client, to cause the second client to synchronize the verification code to a target application.

Optionally, said acquiring by a server a verification code sent by a first client includes: receiving by the server text information sent by the first client; and parsing by the server the text information, to acquire the verification code contained in the text information.

Optionally, said sending by the server the verification code to the second client, including: parsing the text information to determine an application identifier corresponding to the text information; and sending the verification code to the second client in response to the application identifier being a specified application identifier.

Optionally, the method further including: receiving a verification code acquisition request sent by a second client, in which, the verification code acquisition request includes the specified application identifier.

Optionally, said acquiring by a server a verification code sent by a first client includes: acquiring by the server a plurality of verification codes and application identifiers respectively associated with the plurality of verification codes sent by the first client. Said sending by the server the verification code to the second client includes: sending by the server the plurality of verification codes and the application identifiers respectively associated with the plurality of verification codes to the second client.

According to another aspect of the disclosure, a method for synchronizing a verification code is provided. The method includes: acquiring by a first client text information received by a first terminal device; and sending by the first client a verification code to a server in response to the text information including the verification code.

Optionally, said sending by the first client a verification code to a server includes: parsing the text information to determine an application identifier corresponding to the text information; and sending the verification code to the server in response to the application identifier being a specified application identifier.

Optionally, the method further including: receiving a verification code acquisition request sent by the server, in which, the verification code acquisition request includes the specified application identifier; and/or, determining the specified application identifier based on a running state of each application in the first terminal device.

Optionally, said acquiring by a first client text information received by a first terminal device, including: acquiring by the first client a plurality of pieces of text information received by the first terminal device within a continuous time period; and parsing by the first client each piece of text information to acquire a verification code contained in each piece of text information and an application identifier associated with each verification code. Said sending by the first client a verification code to a server, including: sending by the first client each verification code and the application identifier associated with each verification code to the server.

According to another aspect of the disclosure, a method for synchronizing a verification code is provided. The method includes: receiving by a second client a verification code sent by a server; determining by the second client a target application identifier corresponding to the verification code; and synchronizing by the second client the verification code to a target application corresponding to the target application identifier.

Optionally, said determining by the second client a target application identifier corresponding to the verification code, including: determining by the second client the target application identifier based on a running state of each application in a second terminal device; or, determining by the second client the target application identifier based on an application identifier associated with the verification code sent by the server.

Optionally, said synchronizing by the second client the verification code to a target application corresponding to the target application identifier, including: displaying by the second client the verification code and the target application identifier in an association manner; and synchronizing by the second client the verification code to the target application corresponding to the target application identifier in response to receiving a synchronization instruction.

Optionally, the method further including: acquiring by the second client a running state of each application in a second terminal device; and sending a verification code acquisition request to the server in response to the running state of an application meeting a preset condition, in which, the verification code acquisition request includes an identifier of the application.

According to another aspect of the disclosure, an electronic device is provided. The electronic device includes: at least one processor; and a memory communicatively connected to the at least one processor; the memory is stored with instructions executable by the at least one processor, the instructions are executed by the at least one processor, to cause the at least one processor to perform the method for synchronizing a verification code as described in the above any aspect.

According to another aspect of the disclosure, a non-transitory computer readable storage medium stored with computer instructions is provided, the computer instructions are configured to cause a computer to perform the method for synchronizing a verification code as described in the above any aspect.

With the method and the apparatus for synchronizing a verification code, the electronic device and the storage medium provided in the disclosure, the server may acquire a verification code sent by a first client, determine a second client associated with the first client based on an identifier of the first client, and send the verification code to the second client, so that the second client synchronizes the verification code to a target application. Therefore, when a verification code is inputted in case of crossing different terminal devices, automatic synchronization of the verification code may be achieved without any manual operation, which greatly simplifies a process of inputting the verification code and improves efficiency and accuracy, thereby providing a good user experience.

It should be understood that, the content described in the part is not intended to identify key or important features of embodiments of the disclosure, nor intended to limit the scope of the disclosure. Other features of the disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart of a method for synchronizing a verification code according to an embodiment of the disclosure;
FIG. 2 is a flowchart of a method for synchronizing a verification code according to another embodiment of the disclosure;
FIG. 3 is a flowchart of a method for synchronizing a verification code according to another embodiment of the disclosure;
FIG. 4 is a flowchart of a method for synchronizing a verification code according to another embodiment of the disclosure;
FIG. 5 is a flowchart of a method for synchronizing a verification code according to another embodiment of the disclosure;
FIG. 6 is a flowchart of a method for synchronizing a verification code according to another embodiment of the disclosure;
FIG. 7 is a flowchart of a method for synchronizing a verification code according to another embodiment of the disclosure;
FIG. 8 is a schematic diagram of a synchronization process of a verification code according to an embodiment of the disclosure;
FIG. 9 is a block diagram of an apparatus for synchronizing a verification code according to another embodiment of the disclosure;
FIG. 10 is a block diagram of an apparatus for synchronizing a verification code according to another embodiment of the disclosure;
FIG. 11 is a block diagram of an apparatus for synchronizing a verification code according to another embodiment of the disclosure;
FIG. 12 is a block diagram of an electronic device configured to implement a method for synchronizing a verification code according to the embodiment of the disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope of the present disclosure. Similarly, for clarity and conciseness, descriptions of well-known functions and structures are omitted in the following descriptions.

Artificial intelligence (AI) is a subject that learns how a computer simulates certain thinking processes and intelligent behaviors (such as learning, reasoning, thinking, planning, etc.) of human beings, which covers hardware-level technologies and software-level technologies. AI hardware technologies generally include technologies such as sensors, dedicated AI chips, cloud computing, distributed storage, big data processing, etc.; AI software technologies mainly include computer vision technology, speech recognition technology, natural language processing (NLP) technology and machine learning (ML), deep learning (DL), big data processing technology, knowledge graph (KG) technology, etc.

Natural language processing (NLP) is a cross discipline of computer science and linguistics that processes, understands and uses human languages (for example, Chinese, English, etc.) by a computer, often referred to as computational linguistics. Natural language is a fundamental symbol indicating that human beings are different from other animals. Without language, there is no human being's thinking, therefore, NLP embodies the highest task and context of AI, that is, the machine may achieve true intelligence only when the computer has the ability to handle natural language.

A method and an apparatus for synchronizing a verification code, an electronic device and a storage medium in the embodiments of the disclosure are described with reference to accompanying drawings.

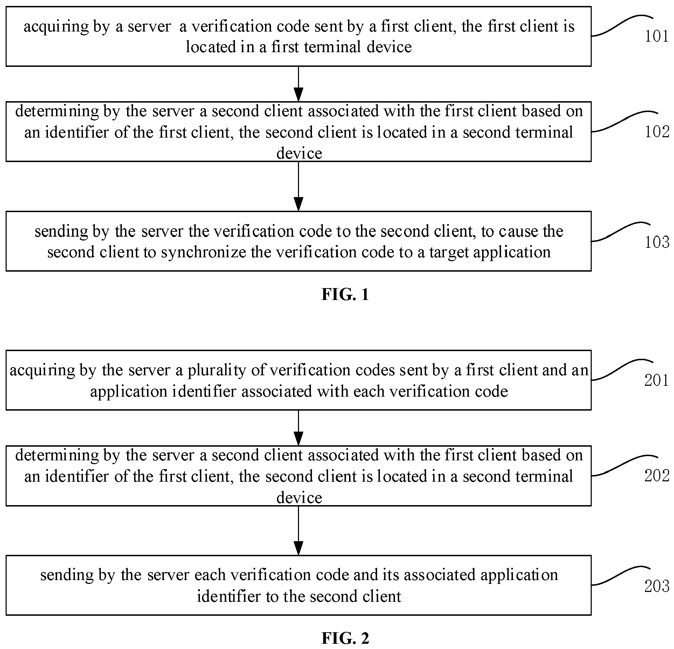

FIG. 1 is a flowchart of a method for synchronizing a verification code according to an embodiment of the disclosure.

As illustrated in FIG. 1, the method for synchronizing a verification code may include the following blocks.

At block 101, a server acquires a verification code sent by a first client. The first client is located in a first terminal device.

It may be understood that the first client may be any application (APP) in a first terminal device, or may be any plugin, or may be a module in any APP, etc., which is not limited in the disclosure.

At block 102, the server determines a second client associated with the first client based on an identifier of the first client. The second client is located in a second terminal device.

The second client may be any APP in the second terminal device, or may be any plugin, or may be a module in any APP, etc., which is not limited in the disclosure.

Additionally, the identifier of the first client may be in any form or format, as long as it may represent the uniqueness of the first client. For example, the identifier of the first client may be a current login account of the first client, or may be a serial number of the first client, which is not limited in the disclosure.

For example, the identifier of the first client is a current login account "AA1" of the first client, the server may determine another client using the same login account "AA1" as the second client associated with the first client.

Alternatively, the identifier of the first client is an email account "AA1BB@youxiang" associated with the first client, the server may determine another client using the same email account "AA1BB@youxiang" as the second client associated with the first client.

Alternatively, association information among clients may be prestored, so that the server may search in the association information based on the identifier of the first client to determine the second client associated with the first client.

It needs to be noted that the above example is merely illustrative and may not be a limitation of the identifier of the first client and a way of determining the second client in the embodiments of the disclosure.

At block 103, the server sends the verification code to the second client, to cause the second client to synchronize the verification code to a target application.

For example, the verification code acquired by the server is "X1ZI", and the second client associated with the first client is determined, then the verification code "X1ZI" may be sent to the second client, so that the second client synchronizes the verification code "X1ZI" to the target application. Therefore, when a verification code needs to be inputted in the second terminal device based on the verification code received by the first terminal device, the verification code may be inputted without any manual operation, which greatly simplifies a process of inputting the verification code and improves efficiency and accuracy, thereby providing a good user experience.

In the embodiment of the disclosure, the server may acquire a verification code sent by a first client, determine a second client associated with the first client based on an identifier of the first client, and send the verification code to a second client, so that the second client synchronizes the verification code to a target application. Therefore, when the verification code is inputted in case of crossing different terminal devices, automatic synchronization of the verification code may be achieved without any manual operation, which greatly simplifies a process of inputting the verification code and improves efficiency and accuracy, thereby providing a good user experience.

In the above embodiment, the server may acquire a verification code sent by a first client, and determine a second client associated with the first client based on an identifier of the first client, and send the verification code to a second client, so that the second client synchronizes the verification code to a target application. In an actual implementation process, the server may acquire a plurality of verification codes and an application identifier associated with each verification code sent by the first client, thereby achieving synchronization of the verification code, which is described in combination with FIG. 2.

FIG. 2 is a flowchart of a method for synchronizing a verification code according to an embodiment of the disclosure. As illustrated in FIG. 2, the method for synchronizing a verification code may include the following blocks.

At block 201, a server acquires a plurality of verification codes and an application identifier associated with each verification code sent by a first client.

The style or presentation form of the application identifier of an application may be in any form, such as name, serial number, etc., of the application, which is not limited in the disclosure.

It may be understood that, the server may acquire the plurality of verification codes and the application identifiers respectively associated with the plurality of verification codes (for each verification code, there is an application identifier associated with the verification code) sent by the first client once, or the server may acquire the plurality of verification codes and the application identifiers associated with the plurality of verification codes sent by the first client respectively within a continuous time period, which is not limited in the disclosure.

At block 202, the server determines a second client associated with the first client based on an identifier of the first client, the second client is located in a second terminal device.

At block 203, the server sends each verification code and its associated application identifier to the second client.

It may be understood that, when sending each verification code and its associated application identifier to the second client, the server may send one verification code and its associated application identifier once, or may send a plurality of verification codes and respective application identifiers once, which is not limited in the disclosure.

For example, a plurality of verification codes sent by the first client and acquired by the client are X1Y2, W1E2, 1W1Y5Z respectively, and the application identifiers associated with the plurality of verification codes are XX Technology, YY Music, WT Great Wisdom, respectively. Then, the server may send "the verification code of XX Technology is X1Y2, the verification code of YY Music is W1E2, and the verification code of WT Great Wisdom is 1W1Y5Z" to the second client.

When a plurality of applications in the second terminal device require verification codes to be inputted, the server may send a plurality of verification codes to the second client, to cause the second client to synchronize each verification code to a corresponding target application, such that efficiency and accuracy of inputting the verification code are improved.

It should be noted that the above examples are only illustrative and may not be a limitation of each verification code and its associated application identifier in the embodiment of the disclosure.

In the embodiment of the disclosure, the server may acquire a plurality of verification codes and an application identifier associated with each verification code sent by a first client, and determine a second client associated with the first client based on an identifier of the first client, and send each verification code and its associated application identifier to the second client, to achieve synchronization of the verification code. Therefore, when a verification code is inputted in case of crossing different terminal devices, the verification code may be inputted without any manual operation, which greatly simplifies a process of inputting the verification code and improves efficiency and accuracy, thereby providing a good user experience.

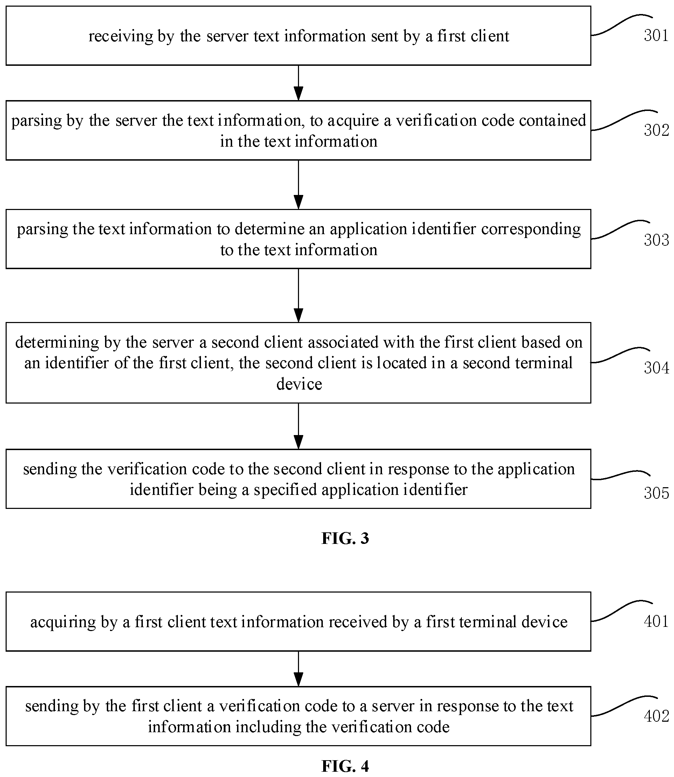

In the above embodiment, the server may acquire a plurality of verification codes and an application identifier associated with each verification code sent by a first client, and determine a second client associated with the first client based on an identifier of the first client, and send each verification code and its associated application identifier to the second client, to achieve synchronization of the verification code. In the actual implementation process, the server may further receive and parse text information sent by the first client to determine the verification code and the application identifier contained in the text information, thereby achieving synchronization of the verification code, which is described below in combination with FIG. 3.

FIG. 3 is a flowchart of a method for synchronizing a verification code according to an embodiment of the disclosure. As illustrated in FIG. 3, the method for synchronizing a verification code may include the following blocks.

At block 301, a server receives text information sent by a first client.

At block 302, the server parses the text information, to acquire a verification code contained in the text information.

It may be understood that, the server may parse the text information in any way of parsing the text information in the related art, which is not limited in the disclosure.

For example, the text information sent by the first client and received by the server is: the verification code of XX Technology is X1Y2, valid within 2 min; the verification code of YY Music is W1E2. Then, it is parsed by a preset regular expression, to determine that verification codes contained in the text information are: XIY2 and W1E2 respectively.

Alternatively, the text information sent by a plurality of first clients and received by the server within a continuous time period is respectively: a verification code of XX Technology is X1Y2, a verification code of YY Music is W1E2, and a verification code of [WT Great Wisdom] is 1W1Y5Z. The plurality of pieces of text information are parsed, to determine that verification codes contained in the plurality of pieces of text information are: X1Y2, W1E2 and 1W1Y5Z respectively.

It needs to be noted that, the above example is merely illustrative and may not be a limitation of the text information, the verification code and a way of parsing the text information in the embodiments of the disclosure.

At block 303, the text information is parsed to determine an application identifier corresponding to the text information.

For example, the text information received by the server is: the verification code of XX Technology is X1Y2, valid within 2 min. Then, it may be parsed to determine that the application identifier corresponding to the text information is: XX Technology.

It needs to be noted that, the above example is merely illustrative and may not be a limitation of the text information, the application identifier and a way of parsing the text information in the embodiments of the disclosure.

At block 304, the server determines a second client associated with the first client based on an identifier of the first client, the second client is located in a second terminal device.

At block 305, the verification code is sent to the second client in response to the application identifier being a specified application identifier.

A specified application may be preset, or may be set based on the user's demand, or may be determined based on a verification code acquisition request sent by the second client, which is not limited in the disclosure.

It may be understood that, a style or presentation form of the specified application identifier may be preset, for example, may be a name or serial number of the specified application, which is not limited in the disclosure.

Alternatively, the verification code acquisition request sent by the second client may include the specified application identifier, so that the server may determine the specified application identifier based on the received verification code acquisition request sent by the second client.

For example, the server parses the received text information sent by the first client and determine that the verification code and the corresponding application identifier contained in the text information are: X1Y2, the application identifier is XX Technology; and W1E2, the application identifier is ZX Music, respectively. Then, based on the received verification code acquisition request sent by the second client, the server determines that the specified application identifier is ZX Music. Thus, the server may send the verification code W1E2 corresponding to ZX Music to the second client, to cause the second client to synchronize the verification code to ZX Music.

When determining a plurality of verification codes and respective application identifiers based on the received text information, the server may determine the specified application identifier based on the specified application identifier contained in the received verification code acquisition request sent by the second client, and then may send the corresponding verification code to the second client in response to the application identifier being the specified application identifier. Therefore, when the second terminal device requires a verification code to be inputted based on the verification code received by the first terminal device, the verification code required by the second terminal device may be determined based on the specified application identifier without any manual operation, thereby achieving automatic synchronization of the verification code, which further reduces the burden of data transmission, further improves accuracy and reliability of inputting the verification code, thereby providing a good user experience.

In the embodiment of the disclosure, the server may receive text information sent by a first client, and parse the text information to acquire a verification code and a corresponding application identifier contained in the text information, and then the server may determine a second client associated with the first client based on an identifier of the first client, and send the verification code to the second client in response to the application identifier being a specified application identifier. Therefore, when a verification code is inputted in case of crossing different terminal device, the verification code may be inputted without any manual operation, which greatly simplifies a process of inputting the verification code and further improves accuracy and reliability of inputting the verification code, thereby providing a good user experience.

The above embodiment describes a method for synchronizing a verification code at a server side in the process of inputting the verification code. In combination with FIG. 4, a method for synchronizing a verification code at a first client size e is described in the process of inputting the verification cod.

FIG. 4 is a flowchart of a method for synchronizing a verification code according to an embodiment of the disclosure. As illustrated in FIG. 4, the method for synchronizing a verification code may include the following blocks.

At block 401, a first client acquires text information received by a first terminal device.

At block 402, the first client sends a verification code to a server in response to the text information including the verification code.

For example, the text information received by the first terminal device and acquired by the first client is: the verification code of [XX music] is W4A7R3, and if it is not operated by yourself, please ignore it. The first client parses the text information to determine that the verification code included in the text information is W4A7R3, and then the verification code "W4A7R3" is sent to the server.

Alternatively, the text information received by the first client device that is acquired by the first client within the continuous time period is "the verification code of [XX music] is W4A7R3, and if it is not operated by yourself, please ignore it" and "your phone credit is 9.8 ¥, please charge in time". The first client parses the two pieces of text information respectively to determine that the verification code included in one of the two pieces of text information is"W4A7R3", and no verification code is included in another of the two pieces of text information. Then, the first client may send the verification code "W4A7R3" to the server, thereby reducing the burden of data transmission and improving efficiency.

It should be noted that the above examples are only illustrative and may not be a limitation of the text information received by the first terminal device and the verification code in the embodiments of the disclosure.

It may be understood that, the first client sends the text information to the server in response to the text information including a verification code, which is not limited in the disclosure.

For example, the text information received by the first terminal device and acquired by the first client is: the verification code of [XX music] is W4A7R3, and if it is not operated by yourself, please ignore it. The first client parses the text information to determine that the text information includes a verification code, so that the first client may send the text information to the server.

It should be noted that the above examples are only illustrative and may not be a limitation of the text information received by the first terminal device and content sent by the first client to the server in the embodiments of the disclosure.

In the embodiment of the disclosure, the first client may acquire text information received by a first terminal device, parse the text information, and send a verification code to a server in response to the text information including the verification code. Therefore, it provides a condition for inputting a verification code in case of crossing different terminal devices, so that automatic synchronization of the verification code may be achieved without any manual operation when the verification code is inputted in case of crossing different terminal devices, which improves efficiency and reliability of inputting the verification code, thereby providing a good user experience.

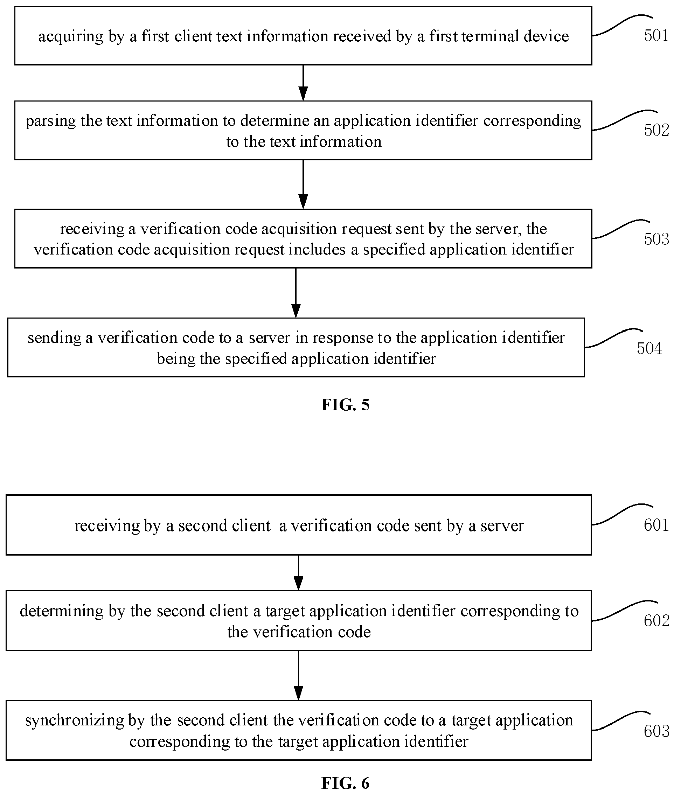

In the above embodiment, the first client may acquire text information received by a first terminal device, parse the text information, and send a verification code to a server in response to the text information including the verification code. In the actual implementation process, the first client may further send the verification code to the server in response to the application identifier being a specified application identifier to achieve synchronization of the verification code, which is further described in combination with FIG. 5.

FIG. 5 is a flowchart of a method for synchronizing a verification code according to an embodiment of the disclosure. As illustrated in FIG. 5, the method for synchronizing a verification code may include the following blocks.

At block 501, a first client acquires text information received by a first terminal device.

At block 502, the text information is parsed to determine an application identifier corresponding to the text information.

For example, the text information received by the first terminal device and acquired by the first client is: the verification code of XX Technology is X1Y2, valid within 2 min. Then, it may be parsed by a preset regular expression to determine that the application identifier corresponding to the text information is: XX Technology.

It needs to be noted that, the above example is merely illustrative and may not be a limitation of the text information, the application identifier and a way of parsing the text information in the embodiments of the disclosure.

At block 503, a verification code acquisition request sent by the server is received, the verification code acquisition request includes a specified application identifier.

The verification code acquisition request may include one specified application identifier, or may further include a plurality of specified application identifiers, which is not limited in the disclosure.

For example, the specified application identifier included in the verification code acquisition request sent by the server and received by the first client is SX application. Thus, the first client may determine that the specified application identifier is SX application, which is not limited in the disclosure.

Alternatively, the specified application identifier may be determined based on a running state of each application in the first terminal device.

For example, there are 3 applications in the first terminal device, and the corresponding running states are respectively: an application 1 is in a login process, an application 2 is in an off state, and an application 3 is in a payment process, and it may be determined that the specified application is the application 2, in this case, the specified application identifier may be application 2.

It should be noted that the above examples are only illustrative and may not be a limitation of the number of applications in the first terminal device, the running state corresponding to each application and the specified application identifier in the embodiments of the disclosure.

Alternatively, the first client may determine the specified application identifier based on the received verification code acquisition request sent by the server and the running state of each application in the first terminal device. Thus, accuracy and reliability of determining the specified application identifier may be improved.

At block 504, the verification code is sent to the server in response to the application identifier being the specified application identifier.

For example, the first client parses the acquired text information received by the first terminal device, to determine that the verification code contained in the text information and the corresponding application identifier are: XX Technology, X1Y2; and ZX Music, W1E2. Based on the received verification code acquisition request sent by the second client, the first client determines the specified application identifier as ZX Music. In this case, the first client may send the verification code W1E2 corresponding to ZX Music to the server. Thus, only the verification code corresponding to the specified application identifier is sent to the server, which reduces data volume sent and improves efficiency and accuracy, and may meet the user's demand better.

It should be noted that the above examples are only illustrative and may not be a limitation of the verification code, the corresponding application identifier and the specified application identifier in the embodiments of the disclosure.

Alternatively, the first client may further send the text information corresponding to the application identifier to the server in response to the application identifier being the specified application identifier, which is not limited in the disclosure.

In the embodiment of the disclosure, the first client may acquire text information received by a first terminal device, parse the text information to determine an application identifier corresponding to the text information, receive a verification code acquisition request sent by a server to determine a specified application identifier, and send a verification code to the server in response to the application identifier being the specified application identifier. Therefore, it provides a condition for inputting the verification code in case of crossing different terminal devices, so that automatic synchronization of the verification code may be achieved without any manual operation when the verification code is inputted in case of crossing different terminal devices, which improves efficiency and reliability of inputting the verification code, thereby providing a good user experience.

It may be understood that, the first terminal device may further receive a plurality of pieces of text information within a continuous time period, so that the first client may acquire the plurality of pieces of text information received by the first terminal device within the continuous time period, parse each piece of text information to acquire a verification code contained in each piece of text information and an application identifier associated with the verification code, and send each verification code and the application identifier associated with each verification code to the server.

It may be understood that, when sending each verification code and its associated application identifier to the server, the first client may send one verification code and its associated application identifier to the server once, or may send a plurality of verification codes and respective associated application identifiers to the server once, which is not limited in the disclosure.

For example, a plurality of pieces of text information received by the first terminal device within a continuous time period and acquired by the first client are respectively: the verification code of XX Technology is X1Y2; the verification code of YY Music is W1E2Y4; and the verification code of [WT Great Wisdom] is 1W1Y5Z. The plurality of pieces of text information are parsed, to determine that verification codes contained in the plurality of pieces of text information are: X1Y2, W1E2 and 1W1Y5Z, respectively, and application identifiers associated with the verification codes are XX Technology, YY Music, WT Great Wisdom, respectively. The first client may send "the verification code of XX Technology is X1Y2", "the verification code of YY Music is W1E2", and "the verification code of WT Great Wisdom is 1W1Y5Z" to the server.

It should be noted that the above examples are only illustrative and may not be a limitation of the verification code, the corresponding application identifier and the specified application identifier in the embodiments of the disclosure.

In the embodiment of the disclosure, the first terminal device may send a verification code and an application identifier associated with each verification code to a server, so that the information received by the server is as complete as possible, and information loss is minimized, thereby enhancing comprehensiveness and completeness.

The above embodiment describes a method for synchronizing a verification code at a server side and a method for synchronizing a verification code at a first client side in the process of inputting the verification code. In combination with FIG. 6, a method for synchronizing a verification code at a second client side is described in the process of inputting the verification code below.

FIG. 6 is a flowchart of a method for synchronizing a verification code according to an embodiment of the disclosure. As illustrated in FIG. 6, the method for synchronizing a verification code may include the following blocks.

At block 601, a second client receives a verification code sent by a server.

At block 602, the second client determines a target application identifier corresponding to the verification code.

Alternatively, the second client may determine the target application identifier based on a running state of each application in a second terminal device.

For example, an application 1 of the second terminal device is in an off state, and an application 2 is in a background running state, and an application 3 is in a verification code inputting process, so that it may be determined that an application identifier AAP3 corresponding to the application 3 is the target application identifier.

It should be noted that the above examples are only illustrative and may not be a limitation of the number of applications in the second terminal device, the running state of each application and the target application identifier in the embodiments of the disclosure.

At block 603, the second client synchronizes the verification code to a target application corresponding to the target application identifier.

For example, the second client determines that the verification code is A1W2, the target application identifier is APP3, and the corresponding target application is the application 3, so that the second client may automatically synchronize A1W2 to the application 3. For example, "A1W2" may be automatically filled in a verification code input box of the application 3. Thus, manual operation is not needed in the process of inputting the verification code, which improves efficiency and accuracy, thereby providing a good user experience.

It should be noted that the above examples are only illustrative and may not be a limitation of the verification code and the target application identifier in the embodiments of the disclosure.

In the embodiment of the disclosure, the second client may receive a verification code sent by a server, determine a target application identifier corresponding to the verification code, and synchronize the verification code to a target application corresponding to the target application identifier. Therefore, when the verification code is inputted in case of crossing different terminal devices, a process of inputting the verification code may be achieved without any manual operation, which improves efficiency and accuracy, thereby providing a good user experience.

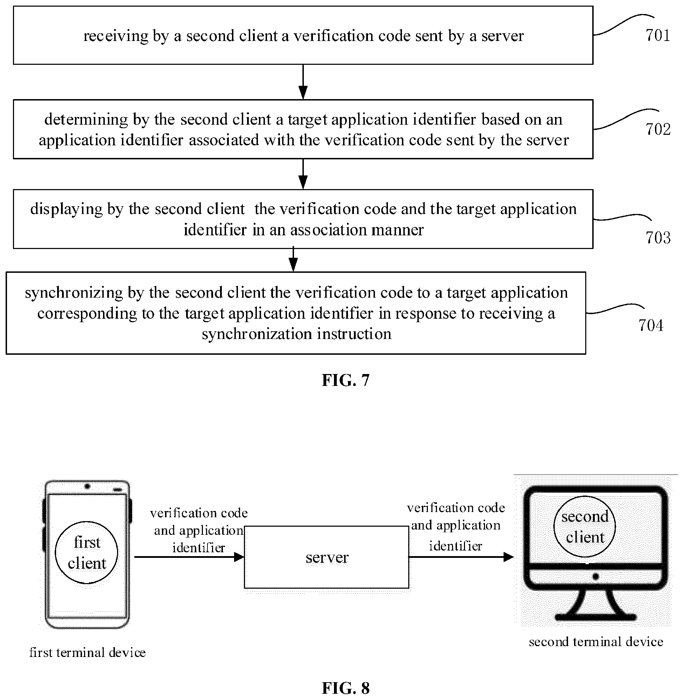

In the embodiment, the second client may receive a verification code sent by a server, determine a target application identifier corresponding to the verification code, and synchronize the verification code to a target application corresponding to the target application identifier. In the actual usage process, in order to meet the user's demand better, the second client may synchronize the verification code to the target application corresponding to the target application identifier in response to receiving a synchronization instruction, which is further described in combination with FIG. 7.

FIG. 7 is a flowchart of a method for synchronizing a verification code according to an embodiment of the disclosure. As illustrated in FIG. 7, the method for synchronizing a verification code may include the following blocks.

At block 701, a second client receives a verification code sent by a server.

At block 702, the second client determines a target application identifier based on an application identifier associated with the verification code sent by the server.

It may be understood that, the verification code sent by the server and received by the second client may be one or more. Correspondingly, the application identifier associated with the verification code may be one or more, which is not limited in the disclosure.

For example, the verification code sent by the server and received by the second client is W1R2, and the associated application identifier is: XY music. In this case, XY Music may be determined as the target application identifier.

Alternatively, the verification codes sent by the server and received by the second client are W1R2, C8P2, 6T5F, respectively, and the application identifiers associated with the verification codes are XY Music, UP Train Ticket, TY Dongting, respectively. In this case, XY Music, UP Train Ticket, and TY Dongting may be determined as target application identifiers.

Alternatively, the second client may determine one or more target application identifiers based on the running state of each application corresponding to each application identifier after receiving a plurality of verification codes and an application identifier associated with each verification code sent by the server.

It should be noted that the above examples are only illustrative and may not be a limitation of the verification code, the application identifier associated with the verification code and the target application identifier in the embodiments of the disclosure.

At block 703, the second client displays the verification code and the target application identifier in an association manner.

There may be many situations when the second client displays the verification code and the target application identifier in an association manner.

For example, each verification code and the target application identifier may be displayed at a center position of a screen. For example, each target application identifier may be displayed in a first column, and a verification code corresponding to each target application identifier may be displayed in a second column; or each verification code is displayed in a first row, and the target application identifier associated with each verification code is displayed in a second row, etc. Therefore, the verification code and the target application identifier may be clearly displayed, so that the user may acquire the information more accurately.

Alternatively, each verification code and the target application identifier may be displayed in a menu bar, a notification bar, or the like.

Alternatively, each verification code and the target application identifier may be displayed in the form of a pop-up window, etc.

It should be noted that the above examples are only illustrative and may not be a limitation of a way of displaying the verification code and the target application identifier in an association manner in the embodiments of the disclosure.

At block 704, the second client synchronizes the verification code to a target application corresponding to the target application identifier in response to receiving a synchronization instruction.

It may be understood that, the synchronization instruction may be triggered by a user. The second client may display the verification code and the target application identifier in an association manner, so that the user may acquire the information accurately. The verification code may be synchronized to the target application corresponding to the target application identifier in response to receiving the synchronization instruction. Thus, operation may be performed in time based on the user's demand, thereby improving efficiency and accuracy and meeting the user's demand better.

Additionally, when the user does not want to continue inputting a verification code, the user may click a corresponding control, and the second client may automatically terminate a verification code inputting process after receiving the instruction, which reduces a data processing process, enhances efficiency and improves convenience of a user.

For example, the target application identifier associated with a current verification code W1Z2 is XX Music, a corresponding target application is XX Music, so that the second client may synchronize the verification code W1Z2 to XX Music in response to receiving the synchronization instruction. In this case, efficiency and accuracy of inputting the verification code are improved, and a good user experience is given.

It may be understood that, after the second client displays the verification code and the target application identifier in an association manner, a user may select any one or more verification codes based on its own demand and send a synchronization instruction. The second client synchronizes the any one or more verification codes selected by the user to respective target applications corresponding to corresponding target application identifiers in response to receiving the synchronization instruction. Thus, the user's demand may be met better and convenience of the user may be improved.

Alternatively, the second client may further acquire a running state of each application in the second terminal device, and send the verification code acquisition request to the server in response to the running state of any application meeting a preset condition, the verification code acquisition request may include an identifier of the any application.

The preset condition may be any interface or process that needs to enter a verification code. For example, if the second terminal determines that an YT email is in a safety verification interface, a corresponding application identifier is YT email. In this case, the second client may send a verification code acquisition code including "YT email" to a server, so that the server may acquire an application identifier of each application that needs to enter a verification code in time, thereby reducing a burden of data transmission between the server and the second client and further improving efficiency and accuracy.

In the embodiment of the disclosure, the second client may receive a verification code sent by a server, determine a target application identifier based on an application identifier associated with the verification code sent by the server, display the verification code and the target application identifier in an association manner, and then synchronize the verification code to a target application corresponding to the target application identifier in response to receiving a synchronization instruction, such that when a verification code is inputted in case of crossing different terminal devices, a process of inputting the verification code is greatly simplified, efficiency and accuracy are improved, thereby providing a good user experience.

Based on the above analysis, the method for synchronizing a verification code in the disclosure may be applied in a scenario where a verification code is inputted in case of crossing different terminal devices, for example, may be any scenario of login verification, payment verification and safety verification in a certain software or a web page, which is not limited in the disclosure. For example, the second terminal device may be any electronic device requiring a verification code to be inputted by means of other terminal device, for example, may be a computer, a vehicle device, any robot, etc. The first terminal device is other electronic device that may directly receive the text information containing the verification code, for example, may be a mobile phone, which is not limited in the disclosure.

For example, the second terminal device is a computer A, and the first terminal device is a mobile phone b. The verification code needs to be inputted in an application 1 of the computer A by means of a verification code received by the mobile phone b. In this case, a first client in the mobile phone b may acquire text information received by the mobile phone b, and then send the text information to a server. The server parses the text information, to determine that the verification code contained in the text information is: P1E5, and the application identifier associated with the verification code is application 1. The server may determine a second client associated with the first client based on an identifier of the first client, and send the verification code and the application identifier associated with the verification code to the second client. The second client is located in the computer A, and the second client may synchronize the verification code P1E5 to the application 1 based on the received verification code and the application identifier associated with the verification code. The schematic diagram of an automatic synchronization process of a verification code may be illustrated in FIG. 8. The process does not need any manual operation, which simplifies a process of inputting the verification code, improves efficiency and accuracy of inputting the verification code, thereby giving a good user experience.

In order to achieve the above embodiments, the disclosure further provides an apparatus for synchronizing a verification code.

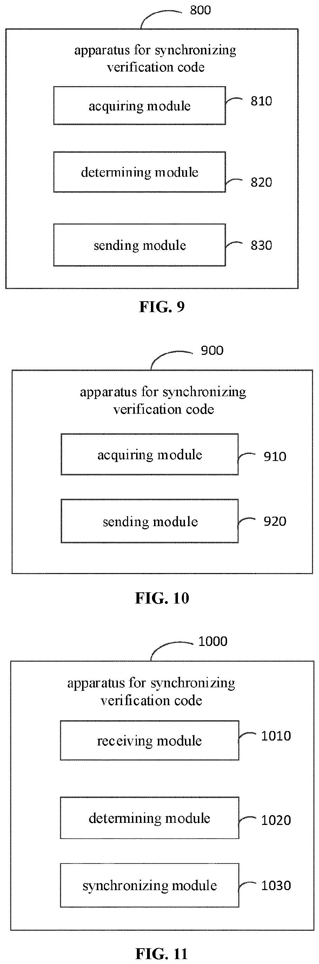

FIG. 9 is a block diagram of an apparatus for synchronizing a verification code according to an embodiment of the disclosure.

As illustrated in FIG. 9, the apparatus 800 for synchronizing a verification code may be configured at a server side, and may include an acquiring module 810, a determining module 820 and a sending module 830.

The acquiring module 810 is configured to acquire a verification code sent by a first client, the first client is located in a first terminal device.

The determining module 820 is configured to determine a second client associated with the first client based on an identifier of the first client, the second client is located in a second terminal device.

The sending module 830 is configured to send the verification code to the second client, to cause the second client to synchronize the verification code to a target application.

Alternatively, the acquiring module 810 is specifically configured to: receive text information sent by the first client; and parse the text information, to acquire the verification code contained in the text information.

Alternatively, the sending module 830 is specifically configured to: parse the text information to determine an application identifier corresponding to the text information; and send the verification code to the second client in response to the application identifier being a specified application identifier.

Alternatively, the above apparatus 800 may further include a receiving module configured to receive a verification code acquisition request sent by the second client, the acquisition request includes the specified application identifier.

Alternatively, the acquiring module 810 is specifically configured to acquire a plurality of verification codes sent by the first client and an application identifier associated with each verification code.

The sending module 830 is further configured to send each verification code and its associated application identifier to the second client.

The functions and specific implementation principles of each module in embodiments of the disclosure may refer to the method embodiment, which is not repeated here.

With the apparatus for synchronizing a verification code in the embodiment of the disclosure, the server may acquire a verification code sent by a first client, determine a second client associated with the first client based on an identifier of the first client, and send the verification code to the second client, so that the second client synchronizes the verification code to a target application. Therefore, when a verification code is inputted in case of crossing different terminal devices, automatic synchronization of the verification code may be achieved without any manual operation, which greatly simplifies a process of inputting the verification code and improves efficiency and accuracy, thereby providing a good user experience.

FIG. 10 is a block diagram of an apparatus for synchronizing a verification code according to an embodiment of the disclosure.

As illustrated in FIG. 10, the apparatus 900 for synchronizing a verification code may be configured at a first client side, and may include an acquiring module 910 and a sending module 920.

The acquiring module 910 is configured to acquire text information received by a first terminal device.

The sending module 920 is configured to send a verification code to a server in response to the text information including the verification code.

Alternatively, the sending module 920 is specifically configured to: parse the text information to determine an application identifier corresponding to the text information; and send the verification code to the server in response to the application identifier being a specified application identifier.

Alternatively, the above apparatus 900 may further include a receiving module and/or a determining module.

The receiving module is configured to receive a verification code acquisition request sent by the server, the acquisition request includes the specified application identifier; and/or, the determining module is configured to determine the specified application identifier based on a running state of each application in the first terminal device.

Alternatively, the acquiring module 910 is specifically configured to acquire a plurality of pieces of text information received by the first terminal device within a continuous time period.

Alternatively, the acquiring module 910 is specifically configured to parse each piece of text information to acquire a verification code contained in each piece of text information and an application identifier associated with each verification code.

The sending module 920 is specifically configured to send each verification code and the application identifier associated with each verification code to the server.

The functions and specific implementation principles of each module in embodiments of the disclosure may refer to the method embodiment, which is not repeated here.

With the apparatus for synchronizing a verification code in the embodiment of the disclosure, the first client may acquire text information received by a first terminal device, parse the text information to determine an application identifier corresponding to the text information, receive a verification code acquisition request sent by a server to determine a specified application identifier, and send the verification code to the server in response to the application identifier being the specified application identifier. Therefore, it provides a condition for inputting a verification code in case of crossing different terminal devices, so that automatic synchronization of the verification code may be achieved without any manual operation when the verification code is inputted in case of crossing different terminal devices, which improves efficiency and reliability of inputting the verification code, thereby providing a good user experience.

FIG. 11 is a block diagram of an apparatus for synchronizing a verification code according to an embodiment of the disclosure.

As illustrated in FIG. 11, the apparatus 1000 for synchronizing a verification code may be configured at a second client side, and may include a receiving module 1010, a determining module 1020 and a synchronizing module 1030.

The receiving module 1010 is configured to receive a verification code sent by a server.

The determining module 1020 is configured to determine a target application identifier corresponding to the verification code.

The synchronizing module 1030 is configured to synchronize the verification code to a target application corresponding to the target application identifier.

Alternatively, the determining module 1020 is specifically configured to: determine the target application identifier based on a running state of each application in the second terminal device; or, determine the target application identifier based on an application identifier associated with the verification code sent by the server.

Alternatively, the synchronizing module 1030 is specifically configured to: display the verification code and the target application identifier in an association manner; and synchronize the verification code to the target application corresponding to the target application identifier in response to receiving a synchronization instruction.

Alternatively, the above apparatus 1000 may further include an acquiring module and a sending module.

The acquiring module is configured to acquire a running state of each application in a second terminal device.

The sending module is configured to send a verification code acquisition request to the server in response to the running state of any application meeting a preset condition, in which the acquisition request includes an identifier of the any application.

The functions and specific implementation principles of each module in embodiments of the disclosure may refer to the method embodiment, which is not repeated here.

With the apparatus for synchronizing a verification code in the embodiment of the disclosure, the second client may receive a verification code sent by a server, determine a target application identifier corresponding to the verification code, and synchronize the verification code to a target application corresponding to the target application identifier. Therefore, a process of inputting a verification code may be achieved without any manual operation when the verification code is inputted in case of crossing different terminal devices, which improves efficiency and accuracy, thereby providing a good user experience.

According to the embodiment of the disclosure, the disclosure further provides an electronic device, a readable storage medium and a computer program product.

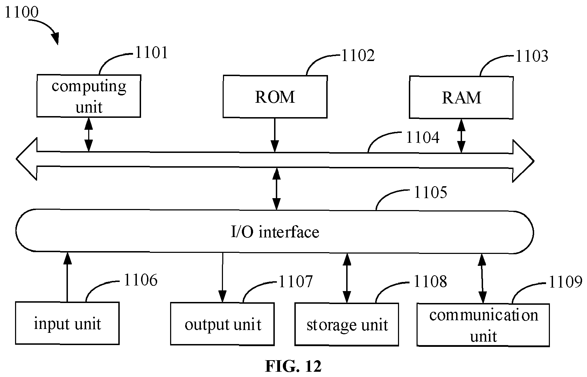

FIG. 12 illustrates a block diagram of an electronic device 1100 configured to implement the embodiment of the disclosure. The electronic device is intended to represent various types of digital computers, such as laptop computers, desktop computers, workstations, personal digital assistants, servers, blade servers, mainframe computers, and other suitable computers. The electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 12, the electronic device 1100 includes a computing unit 1101, configured to execute various appropriate actions and processes according to a computer program stored in a read-only memory (ROM) 1102 or loaded from a storage unit 1108 to a random access memory (RAM) 1103. In a RAM 1103, various programs and data required for a storage device 1100 may be stored. The computing unit 1101, the ROM 1102, and the RAM 1103 are connected to each other through a bus 1104. An input/output (I/O) interface 1105 is also connected to the bus 1104.

Several components in the device 1100 are connected to the I/O interface 1105, and include: an input unit 1106, for example, a keyboard, a mouse, etc.; an output unit 1107, for example, various types of displays, speakers, etc.; a storage unit 1108, for example, a magnetic disk, an optical disk, etc.; and a communication unit 1109, for example, a network card, a modem, a wireless communication transceiver, etc. The communication unit 1109 allows the device 1100 to exchange information/data with other devices over a computer network such as the Internet and/or various telecommunication networks.

The computing unit 1101 may be various general-purpose and/or special-purpose processing components with processing and computing capacities. Some examples of the computing unit 1101 include but not limited to a central processing unit (CPU), a graphs processing unit (GPU), various dedicated artificial intelligence (AI) computing chips, various computing units running a machine learning model algorithm, a digital signal processor (DSP), and any appropriate processor, controller, microcontroller, etc. The computing unit 1101 performs various methods and processings as described above, for example, a method for synchronizing a verification code. For example, in some embodiments, a method for synchronizing a verification code may be further implemented as a computer software program, which is physically contained in a machine readable medium, such as the storage unit 1108. In some embodiments, a part or all of the computer program may be loaded and/or installed on the device 1100 through the ROM 1102 and/or the communication unit 1109. When the computer program is loaded on the RAM 1103 and performed by the computing unit 1101, one or more blocks in the above method for synchronizing a verification code may be performed. Alternatively, in other embodiments, the computing unit 1101 may be configured to perform a method for synchronizing a verification code in other appropriate ways (for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, also known as a cloud computing server or a cloud host, is a host product in a cloud computing service system, to solve the shortcomings of large management difficulty and weak business expansibility existed in the conventional physical host and Virtual Private Server (VPS) service. A server further may be a server with a distributed system, or a server in combination with a blockchain.

In the technical solution of the disclosure, the server may acquire a verification code sent by a first client, determine a second client associated with the first client based on an identifier of the first client, and send the verification code to the second client, so that the second client synchronizes the verification code to a target application. Therefore, when a verification code is inputted in case of crossing different terminal devices, automatic synchronization of the verification code may be achieved without any manual operation, which greatly simplifies a process of inputting the verification code and improves efficiency and accuracy, thereby providing a good user experience.

It should be understood that, various forms of procedures shown above may be configured to reorder, add or delete blocks. For example, blocks described in the disclosure may be performed in parallel, sequentially, or in a different order, as long as the desired result of the technical solution disclosed in the present disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the principle of embodiments of the present disclosure shall be included within the protection scope of the present disclosure.

## Claims

1. A method for synchronizing a verification code, comprising:
acquiring (101) by a server a verification code sent by a first client, wherein the first client is located in a first terminal device;
determining (102, 202, 304) by the server a second client associated with the first client based on an identifier of the first client, wherein, the second client is located in a second terminal device; and
sending (103) by the server the verification code to the second client, to cause the second client to synchronize the verification code to a target application.

2. The method of claim 1, said acquiring (101) by a server a verification code sent by a first client, comprising:
receiving (301) by the server text information sent by the first client; and
parsing (302) by the server the text information, to acquire the verification code contained in the text information.

3. The method of claim 2, said sending (103) by the server the verification code to the second client, comprising:
parsing (303) the text information to determine an application identifier corresponding to the text information; and
sending (305) the verification code to the second client in response to the application identifier being a specified application identifier.

4. The method of claim 3, further comprising:
receiving a verification code acquisition request sent by a second client, wherein, the verification code acquisition request comprises the specified application identifier.

5. The method of any of claims 1 to 4,
said acquiring (101) by a server a verification code sent by a first client, comprising:
acquiring (201) by the server a plurality of verification codes and application identifiers respectively associated with the plurality of verification codes sent by the first client;
said sending (103) by the server the verification code to the second client, comprising:
sending (203) by the server the plurality of verification codes and the application identifiers respectively associated with the plurality of verification codes to the second client.

6. A method for synchronizing a verification code, comprising:
acquiring (401, 501) by a first client text information received by a first terminal device; and
sending (402) by the first client a verification code to a server in response to the text information comprising the verification code.

7. The method of claim 6, said sending (402) by the first client a verification code to a server, comprising:
parsing (502) the text information to determine an application identifier corresponding to the text information; and
sending (504) the verification code to the server in response to the application identifier being a specified application identifier.

8. The method of claim 7, further comprising:
receiving (503) a verification code acquisition request sent by the server, wherein, the verification code acquisition request comprises the specified application identifier;
and/or,
determining the specified application identifier based on a running state of each application in the first terminal device.

9. The method of any of claims 6 to 8,
said acquiring (401, 501) by a first client text information received by a first terminal device, comprising:
acquiring by the first client a plurality of pieces of text information received by the first terminal device within a continuous time period; and
parsing by the first client each piece of text information to acquire a verification code contained in each piece of text information and an application identifier associated with each verification code;
said sending (402) by the first client a verification code to a server, comprising:
sending by the first client each verification code and the application identifier associated with each verification code to the server.

10. A method for synchronizing a verification code, comprising:
receiving (601, 701) by a second client a verification code sent by a server;
determining (602) by the second client a target application identifier corresponding to the verification code; and
synchronizing (603) by the second client the verification code to a target application corresponding to the target application identifier.

11. The method of claim 10, said determining (602) by the second client a target application identifier corresponding to the verification code, comprising:
determining by the second client the target application identifier based on a running state of each application in a second terminal device;
or,
determining (702) by the second client the target application identifier based on an application identifier associated with the verification code sent by the server.

12. The method of claim 10, said synchronizing (603) by the second client the verification code to a target application corresponding to the target application identifier, comprising:
displaying (703) by the second client the verification code and the target application identifier in an association manner; and
synchronizing (704) by the second client the verification code to the target application corresponding to the target application identifier in response to receiving a synchronization instruction.

13. The method of any of claims 10 to 12, further comprising:
acquiring by the second client a running state of each application in a second terminal device; and
sending a verification code acquisition request to the server in response to the running state of an application meeting a preset condition, wherein, the verification code acquisition request comprises an identifier of the application.

14. An electronic device, comprising:
at least one processor; and
a memory communicatively connected to the at least one processor; wherein,
the memory is stored with instructions executable by the at least one processor, the instructions are executed by the at least one processor, to cause the at least one processor to perform the method of any of claims 1 to 13.

15. A non-transitory computer readable storage medium stored with computer instructions, wherein, the computer instructions are configured to cause a computer to perform the method of any of claims 1 to 13.
